# FASCICULE DE BREVET EUROPEEN

(11) **EP 3 627 663 B1**
(45) Date de publication et mention de la délivrance du brevet: **11.02.2026**
(21) Numéro de dépôt: 19198086.1
(22) Date de dépôt: 18.09.2019
(51) Int. Cl.: H02K 9/19, H02K 1/32, H02K 3/22, H02K 17/16, H02K 7/00

(54) **ROTOR POUR MACHINE ÉLECTRIQUE ASYNCHRONE À ARBRE NON TRAVERSANT ET MACHINE ÉLECTRIQUE ASSOCIÉE**
EIN ROTOR FÜR EINE ROTIERENDE ELEKTRISCHE ASYNCHRONMACHINE UMFASSEND EINE NICHT DURCHLAUFENDE WELLE UND DIE ELEKTRISCHE MASCHINE
A ROTOR FOR AN ASINCHRONOUS ELECTRICAL MACHINE INCLUDING A SHAFT NOT PASSING THERETHROUGH AND THE ELECTRICAL MACHINE

(30) Priorité: 19.09.2018 FR 1858466
(43) Date de publication de la demande: 25.03.2020
(73) Titulaire: GE Energy Power Conversion Technology Ltd, Rugby, Warwickshire CV21 1BD (GB)
(72) Inventeur: GALMICHE, Christophe, 54200 TOUL (FR); VELLY, Nicolas, 54390 FROUARD (FR); BITTERMANN, Mathieu, 54320 MAXEVILLE (FR); DURANTAY, Lionel, 54390 FROUARD (FR)
(74) Mandataire: Casalonga

(56) Documents cités:
- EP-A1- 0 739 076
- EP-A1- 2 615 726
- EP-A1- 3 048 703
- EP-A2- 1 024 580
- EP-B1- 0 739 076
- CN-A- 106 877 612
- JP-U- S6 127 446

## Description

La présente invention concerne les machines électriques tournantes asynchrones à cage d'écureuil et se rapporte plus particulièrement au refroidissement d'un rotor comprenant un arbre non traversant.

La présente invention concerne également une machine électrique tournante comprenant un tel rotor.

Un rotor en rotation comportant une cage d'écureuil s'échauffe sous l'effet des courants traversant la cage d'écureuil.

L'échauffement du rotor diminue le rendement global de la machine électrique, ainsi que sa puissance électrique disponible.

Les documents EP0225440 et US6345433 décrivent un rotor pour machine électrique asynchrone comprenant des rainures régulièrement disposées sur la surface périphérique externe de la masse magnétique du rotor.

Cependant, les rainures sont dimensionnées de manière à dévier les courants induits pour réduire les pertes magnétiques dans la masse magnétique.

De plus, dans le document US6345433, le rotor comprend un arbre traversant, et le document EP0225440 divulgue un rotor comportant un arbre monobloc.

Le document EP3048703 divulgue un rotor comprenant un arbre non traversant, une masse magnétique cylindrique serrée entre deux demi-arbres et une cage d'écureuil.

Le document EP0739076 divulgue un rotor comprenant un arbre traversant et des canaux dans lesquels circulent un fluide.

Les documents JPS6127446U et EP2615726 divulguent un rotor comprenant des barres conductrices.

Le document CN106877612 divulgue un rotor comprenant des trous traversants axiaux pour refroidir le rotor pendant son fonctionnement et des barres conductrices.

Le document EP1024580 divulgue un rotor comprenant des rainures et des canaux de refroidissement entre un axe de rotation du rotor et les rainures.

Il est donc proposé de pallier les inconvénients des rotors pour une machine électrique tournante asynchrone à cage d'écureuil selon l'état de la technique.

Au vu de ce qui précède, l'invention propose, un rotor selon la revendication indépendante.

Les modes de réalisation suivants relèvent de l'étendue de la protection conférée par l'invention, sauf indication expresse contraire.

De préférence, les moyens de refroidissement comprenant des rainures sur la surface périphérique de la masse magnétique orientées selon une direction axiale ou des rainures circonférentielles sur la surface périphérique de la masse magnétique.

De préférence, le rotor comprend en outre des moyens d'alimentation pour alimenter en fluide de refroidissement les moyens de refroidissement et reliés aux moyens de refroidissement.

Avantageusement, le canal de refroidissement est situé entre la barre conductrice et un axe de rotation du rotor.

De préférence, les moyens de refroidissement comprennent en outre un deuxième canal de refroidissement alimenté par les moyens d'alimentation pour chaque barre conductrice et situé entre la périphérie externe de la masse magnétique et la barre conductrice.

De préférence, chaque extrémité du rotor comprend des moyens d'alimentation.

Avantageusement, le rotor comprend en outre un élément de séparation disposé dans le canal de refroidissement entre au moins deux trous périphériques de manière à séparer les flux de fluide de refroidissement s'écoulant depuis chaque extrémité du rotor.

Avantageusement, les trous traversant sont disposés sur la barre conductrice de manière à refroidir la partie la plus chaude de la barre conductrice.

Selon une autre caractéristique, le rotor comprend des barres conductrices logées dans la masse magnétique et réparties uniformément sur un diamètre de la masse magnétique, les moyens de refroidissement comprenant des canaux de refroidissement s'étendant selon une direction axiale dans la masse magnétique et situés entre les barres conductrices et un axe de rotation du rotor de manière à ne pas communiquer avec les barres conductrices.

Avantageusement, les canaux sont disposés entre deux barres conductrices adjacentes.

De préférence, les canaux de refroidissement sont disposés sous les barres conductrices, dans des plans sensiblement médians aux barres.

Selon encore une autre caractéristique, le rotor comprend en outre des canaux d'évacuation reliant les canaux de refroidissement à des trous disposés sur la surface périphérique externe de la masse magnétique.

Selon encore une autre caractéristique, le rotor comprend en outre au moins un disque de court-circuit à une extrémité de la masse magnétique et des moyens d'alimentation situés dans le disque de court-circuit destinés à alimenter en fluide de refroidissement les moyens de refroidissement.

De préférence, le disque de court-circuit comprend sur sa surface périphérique externe des rainures orientées selon une direction axiale ou des rainures circonférentielles.

Selon un autre aspect, il est proposé une machine électrique tournante asynchrone comprenant un rotor tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1 illustre un mode de réalisation d'une machine électrique tournante asynchrone;
- la figure 2 illustre un premier mode de réalisation du rotor à arbre non traversant ;
- la figure 3 illustre un deuxième mode de réalisation du rotor à arbre non traversant ;
- la figure 4 illustre un troisième mode de réalisation du rotor à arbre non traversant ;
- la figure 5 illustre un quatrième mode de réalisation du rotor à arbre non traversant ;
- la figure 6 illustre un cinquième mode de réalisation du rotor à arbre non traversant ;
- la figure 7 illustre un sixième mode de réalisation du rotor à arbre non traversant ;
- la figure 8 illustre un septième mode de réalisation du rotor à arbre non traversant ;
- la figure 9 illustre un huitième mode de réalisation du rotor à arbre non traversant ;
- la figure 10 illustre un neuvième mode de réalisation du rotor à arbre non traversant ;
- la figure 11 illustre une coupe partielle du huitième mode de réalisation du rotor à arbre non traversant ;
- la figure 12 illustre une coupe partielle du neuvième mode de réalisation du rotor à arbre non traversant ;
- la figure 13 illustre un dixième mode de réalisation du rotor à arbre non traversant ; et
- les figures 14 à 29 illustrent des profils de canal de refroidissement.

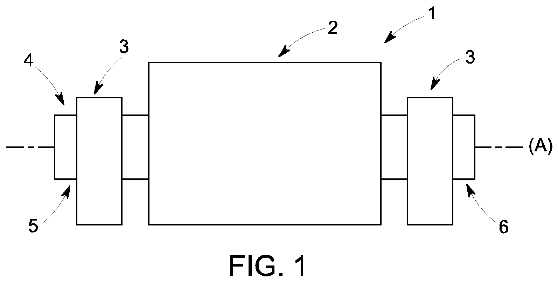

On se réfère à la figure 1 qui illustre un mode de réalisation d'une machine électrique tournante asynchrone 1 comprenant un stator 2, des paliers 3 et un rotor 4 inséré dans le stator 2 et les paliers 3.

Le rotor 4 comprend un arbre rotorique non traversant comprenant deux demi-arbres 5 et 6 et un axe (A) confondu avec l'axe de rotation du rotor 4.

Le rotor 4 comprend un arbre rotorique non traversant réalisé par exemple en acier, d'axe (A) confondu avec l'axe de rotation du rotor 4 et des moyens de refroidissement aptes à refroidir le rotor 4.

La machine électrique tournante asynchrone 1 est par exemple intégrée dans un motocompresseur.

Le rotor 4 baigne dans le gaz refroidissant le rotor, par exemple le gaz comprimé par le motocompresseur.

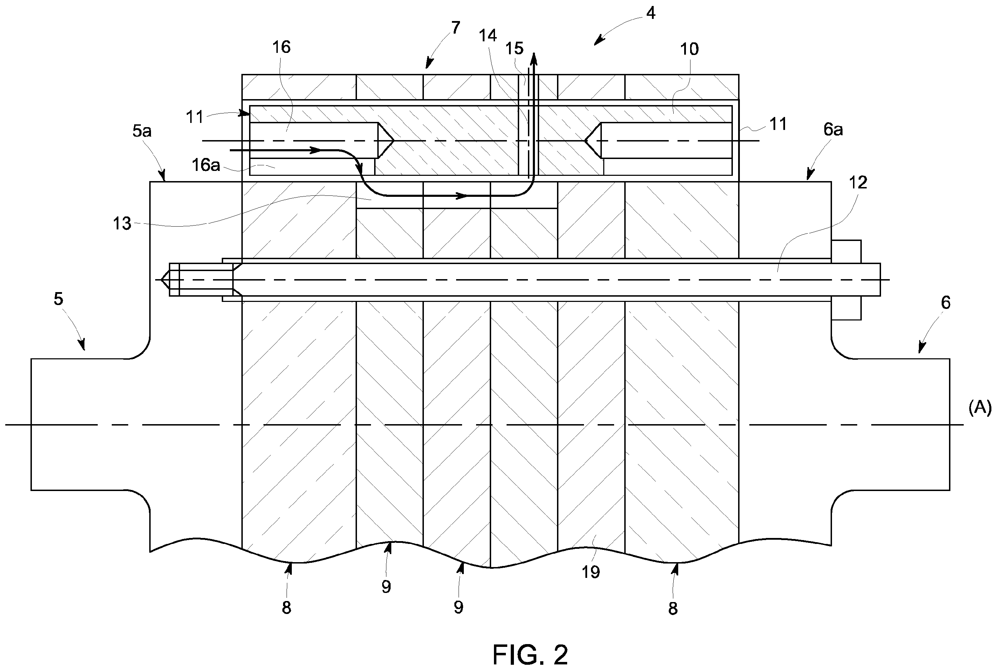

Comme visible sur la figure 2, le rotor 4 comprend deux demi-arbres 5 et 6 comprenant respectivement une bride de fixation 5a et 6a enserrant une masse magnétique cylindrique 7 et deux disques de court-circuit 8 intercalés chacun entre un demi-arbre et une des extrémités de la masse magnétique 7.

La masse magnétique 7 comprend des plaques métalliques 9 comportant des logements accueillant des barres conductrices 10 réparties uniformément sur un diamètre de la masse magnétique 7.

Les logements sont dimensionnés pour compenser la dilatation des barres conductrices 10 sous l'effet de la chaleur générée par le passage du courant lors de son fonctionnement et ainsi empêcher un balourd thermo-mécanique.

Les disques de court-circuit 8 et les barres conductrices 10 sont réalisés par exemple en cuivre et sont électriquement reliés entre eux pour former une cage d'écureuil lorsque le rotor est animé d'un mouvement de rotation.

Chaque disque de court-circuit 8 comprend des trous débouchant 11 dans lesquels sont respectivement logées les extrémités de chaque barre conductrice 10. Chaque extrémité de barre conductrice s'insère dans un trou 11 avec un jeu afin de compenser la dilatation des barres conductrices 16 sous l'effet de la chaleur générée par le passage du courant en fonctionnement.

Lorsque le rotor 4 est animé d'un mouvement de rotation à une vitesse de par exemple 30000 tours par minute, les barres 10 sont projetées vers l'extérieur de la masse magnétique 7 sous l'effet de la force centrifuge.

Les barres 10 viennent en contact avec les disques de court-circuit 8.

Des tirants 12 maintiennent la masse magnétique 7 compactée entre les demi-arbres 5 et 6.

En variante non représentée, les plaques métalliques 9 sont assemblées deux à deux par des vis dont la tête est noyée dans l'épaisseur de la plaque, et les demi-arbres 5 et 6 sont fixés à la masse magnétique 7 par des vis.

Selon encore une autre variante non représentée, les plaques métalliques 9 sont assemblées et compactées par des tirants reliant les deux plaques d'extrémité et les demi-arbres 5, 6 sont fixés à la masse magnétique 7 par des vis.

Les moyens de refroidissement du rotor 4 comprennent un canal de refroidissement 13 débouchant sur la barre selon une direction axiale dans la masse magnétique 7 et un trou traversant 14 disposé dans la barre conductrice 10 de préférence sensiblement radial de sorte que le canal de refroidissement 13 communique avec un trou 15 disposé sur la surface périphérique externe de la masse magnétique 7.

Bien entendu, chacune des barres conductrices 10 du rotor 4 comprend des moyens de refroidissement.

Le canal 13 est situé entre la barre conductrice 10 et l'axe (A) de rotation du rotor.

Le rotor 4 comprend en outre des moyens d'alimentation en fluide de refroidissement des moyens de refroidissement.

Les moyens d'alimentation comprennent à une extrémité de chaque barre conductrice 10 un trou borgne 16 orienté selon une direction axiale et une fente 16a ouvrant le trou borgne 16 selon une direction axiale, de sorte qu'un fluide de refroidissement s'écoule dans le trou borgne 16, puis dans la fente 16a pour s'écouler dans le canal 13.

Le diamètre extérieur du demi-arbre 5 à l'extrémité du rotor comportant le trou borgne 16 est choisi de sorte que du fluide de refroidissement s'écoule de l'extérieur de rotor vers le trou borgne 16, c'est-à-dire le diamètre extérieur du demi-arbre n'obture pas les trous borgnes 16.

Le fluide de refroidissement est par exemple le gaz entourant le rotor 4, ce gaz pouvant être le gaz comprimé par le motocompresseur ou tout autre type de gaz, par exemple de l'air ou de l'azote.

En variante, le demi-arbre 5 comprend un trou débouchant de direction sensiblement axiale de sorte que le fluide de refroidissement s'écoule de l'extérieur du rotor 4 vers le trou borgne 16.

Le canal 13 est par exemple sensiblement circulaire et de diamètre différent de celui du trou traversant 14.

La différence des diamètres du canal 13 et du trou traversant 14 crée sous l'effet de la force centrifuge une aspiration du fluide de refroidissement du trou borgne 16 vers le trou référencé 15.

Comme les moyens d'alimentation sont disposés à une seule extrémité du rotor 4, le refroidissement est unilatéral.

La masse magnétique 7 comporte également un élément de séparation 19 formé par une plaque métallique de manière à obturer le canal 13 à l'opposé de l'entrée du fluide de refroidissement afin de forcer le fluide à s'écouler radialement par les trous périphériques 15.

Dans ce qui suit, les éléments identiques à ceux décrits précédemment sont identifiés par les mêmes références alphanumériques.

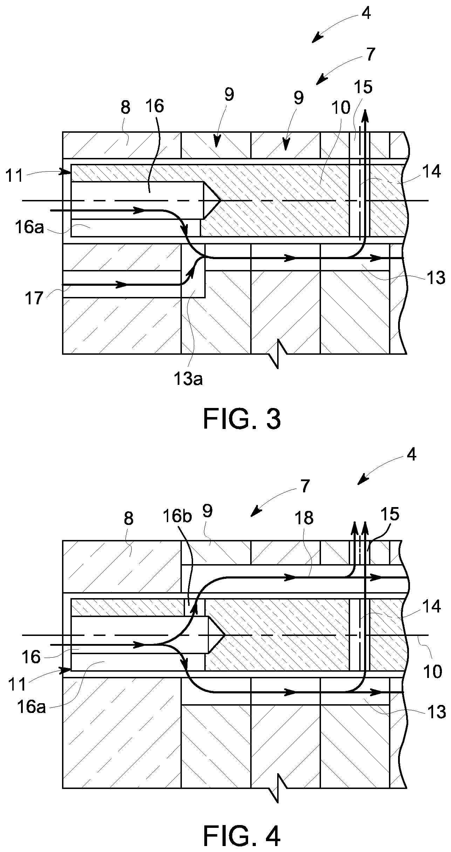

Un deuxième mode de réalisation du rotor 4 illustré à la figure 3 montre une coupe partielle selon une direction axiale de la masse magnétique 7 comprenant les plaques métalliques 9, le disque de court-circuit 8 et la barre 10, et diffère du mode de réalisation précédent en ce que les moyens d'alimentation comprennent en outre un trou traversant 17 selon une direction sensiblement axiale disposé dans le disque de court-circuit 8 de sorte que le fluide de refroidissement traversant le disque de court-circuit 8 s'écoule dans le canal 13, la ou les plaques métalliques 9 aux extrémités de la masse magnétique 7 comportant un canal 13a de sorte que le fluide de refroidissement s'écoule du trou traversant 17 vers le canal 13.

En variante, les demi-arbres 5 et 6 comportent des trous débouchant de direction sensiblement axiale de sorte que le fluide de refroidissement s'écoule de l'extérieur du rotor 4 vers le trou borgne 16 et le trou traversant 17.

La figure 4 montre une coupe partielle de la masse magnétique 7 selon une direction axiale selon un troisième mode de réalisation et diffère du premier mode de réalisation en ce que les moyens de refroidissement comprennent en outre un deuxième canal de refroidissement 18 alimenté par les moyens d'alimentation et situé entre la périphérie externe de la masse magnétique 7 et la barre conductrice 10, les moyens d'alimentation comprenant en outre un trou traversant 16b de direction sensiblement radiale orienté vers la plaque 9 et débouchant sur le trou borgne 16.

Le trou traversant 16b alimente le deuxième canal 18 en fluide de refroidissement.

En variante non représentée, la barre 10 comprend un trou borgne 16 et un trou traversant 16b alimentant un canal de refroidissement disposé entre la périphérie externe de la masse magnétique 7 et la barre conductrice 10.

Selon encore une autre variante non représentée, le disque de court-circuit 8 comprend un trou traversant 17 communiquant avec les canaux 13a et 13, le canal 13a communiquant avec le trou traversant 14 pour alimenter le deuxième canal 18 en fluide de refroidissement.

En variante non représentée, le rotor comprend deux trous 11 et 17 tels que représentés aux figures 3 et 4 alimentant les canaux 13 et 18 via les trous 16a et 16b.

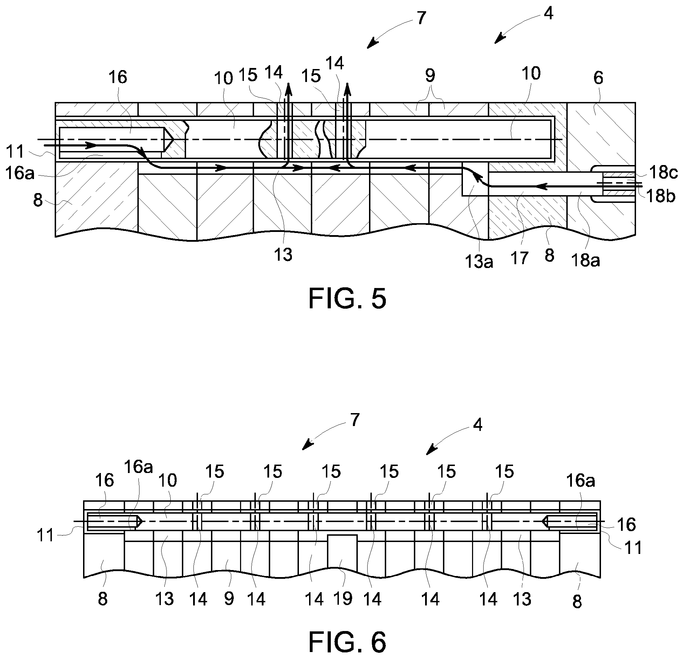

Un quatrième mode de réalisation est illustré à la figure 5 montrant une coupe partielle de la masse magnétique 7 selon une direction axiale. Ce mode de réalisation diffère du premier mode de réalisation en ce que les deux extrémités du rotor 4 comprennent des moyens d'alimentation et en ce qu'une extrémité de la barre conductrice 10 est encapsulée avec un jeu radial et axial dans le disque de court-circuit 8.

Une première extrémité du rotor comprend des moyens d'alimentation selon le premier mode de réalisation du rotor 4 et la deuxième extrémité du rotor 4 comprend des moyens d'alimentation selon le deuxième mode de réalisation sans le trou borgne 16.

Comme chaque extrémité du rotor 4 comprend des moyens d'alimentation, le refroidissement du rotor 4 est bilatéral.

Le trou traversant 17 comprend un trou circulaire coaxial avec un trou 18a circulaire débouchant du demi-arbre 6.

Le trou référencé 18a comprend un trou taraudé à son extrémité et débouchant vers l'extérieur, ce trou accueillant un bouchon 18c pourvu d'un trou 18b axial et sensiblement coaxial aux trous 18a et 18b. Ce trou est calibré de manière à fixer le débit de fluide de refroidissement traversant le trou débouchant 18a à une valeur prédéterminée.

La valeur prédéterminée est fixée par exemple par des essais de refroidissement du rotor 4.

En variante, le trou référencé 18a ne comporte pas de trou calibré.

Selon d'autres variantes, le rotor 4 comprend des moyens d'alimentation identiques ou différents à ses extrémités.

Les trous référencés 14 et 15 sont circulaires et coaxiaux.

En variantes, les trous référencés 14 et 15 peuvent ne pas être coaxiaux.

On se réfère à la figure 6 qui illustre un autre mode de réalisation du rotor 4.

Ce mode de réalisation diffère du mode de réalisation précédent en ce que les moyens d'alimentation aux extrémités du rotor 4 sont identiques et comprennent chacun un trou borgne 16 et une fente 16a.

La masse magnétique 7 comporte en outre un élément de séparation 19 disposé dans le canal 13 de refroidissement entre au moins deux trous périphériques 15 de manière à séparer les flux de fluide de refroidissement s'écoulant depuis chaque extrémité du rotor 4.

La barre 10 comprend par exemple six trous traversant 14 répartis uniformément sur la barre 10 et coaxiaux avec les trous périphériques 15.

En variante, les trous traversant 14 sont disposés non uniformément sur la barre conductrice 10 de manière à refroidir la partie la plus chaude de la barre conductrice, généralement la zone centrale de la barre dans le cas d'un refroidissement du type bilatéral, ou sur la zone opposée à l'entrée du fluide dans le cas d'un refroidissement unilatéral.

Selon l'invention, le canal 13 comprend au moins un élément de support destiné à supporter la barre conductrice 10 de sorte que la section de passage du fluide autour de l'élément de support soit identique à la section de passage du canal de refroidissement 13.

En variante non représentée, le rotor 4 comprend les canaux de refroidissement 13 et 18, un moyen d'alimentation tel que décrit à la figure 4 et les trous traversant 14 disposés uniformément ou non sur la barre conductrice 10.

Le rotor comprend en outre les trous périphériques 15 coaxiaux ou non avec les trous 14 de manière à réaliser un refroidissement unilatéral ou bilatéral du rotor 4.

Un ou plusieurs éléments de séparation 19 peuvent être disposés à l'opposé de l'entrée du fluide ou sont disposés sensiblement au centre de la longueur axiale de la masse magnétique 7 de manière à réaliser un refroidissement bilatéral du rotor 4.

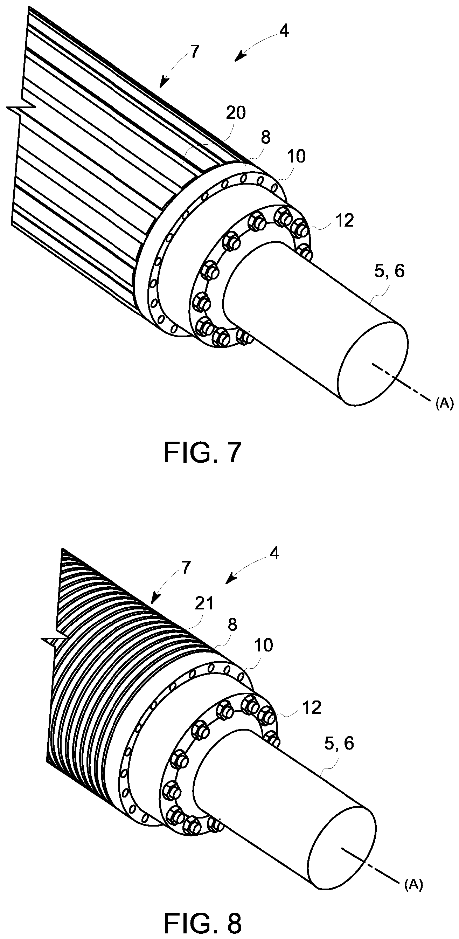

Les figures 7 et 8 illustrent d'autres modes de réalisation du rotor 4 augmentant la surface d'échange entre la surface périphérique externe de la masse magnétique 7 et le fluide de refroidissement.

Dans le mode de réalisation illustré à la figure 7, les moyens de refroidissement comprennent des rainures 20 sur la surface périphérique externe de la masse magnétique 7 orientées selon une direction axiale et dans le mode de réalisation illustré à la figure 8 les moyens de refroidissement comprennent des rainures circonférentielles 21 sur la surface périphérique externe de la masse magnétique 7.

Les rainures référencées 20 et 21 peuvent être carrées, rectangulaires, trapézoïdales, triangulaires, ondulées.

La profondeur des rainures 20 et 21 est déterminée selon l'augmentation souhaitée de la surface d'échange externe de la masse magnétique 7 et de l'espace radial disponible entre la périphérie de la masse magnétique 7 et les barres conductrices 10.

Les rainures 20 et 21 peuvent être obtenues par exemple par usinage dans les plaques 9 ou en usinant les tôles magnétiques une fois compactées.

En variante, les rainures 20 sont découpées dans chaque tôle magnétique et les rainures 21 sont par exemple obtenues par différents diamètres extérieurs découpés dans deux versions de tôles magnétiques.

Les modes de réalisation des moyens de refroidissement illustrés aux figures 7 et 8 peuvent être combinés avec les modes de réalisation du rotor 4 décrits précédemment.

En variante non représentée, les disques de court-circuit 8 et/ou les brides de fixation 5a et 6a peuvent comporter en outre sur leur surface périphérique externe des rainures orientées selon une direction axiale ou des rainures circonférentielles.

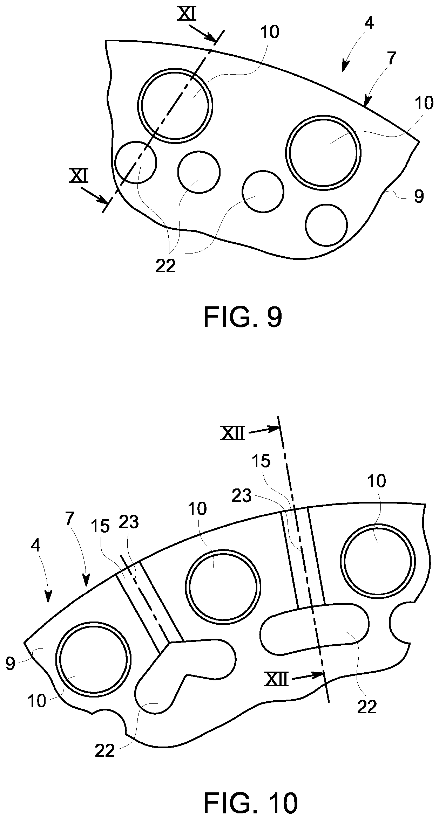

On se réfère aux figures 9 à 13 qui illustrent d'autres modes de réalisation du rotor 4 dans lesquelles les moyens de refroidissement comprennent des canaux de refroidissement 22 s'étendant selon une direction axiale dans la masse magnétique 7 et situés entre les barres conductrices 10 et l'axe (A) de rotation du rotor de manière à ne pas communiquer avec les barres 10.

Le fluide de refroidissement peut contenir des composants susceptibles d'endommager les barres conductrices 10, par exemple des composants corrosifs ou chimiquement agressifs contenus dans le gaz.

De plus, le fluide de refroidissement entre dans le rotor sous haute pression, par exemple à une pression de 50 à 200 bars quand le rotor 4 est refroidi par le gaz du compresseur par exemple dans le cas d'un moto-compresseur.

Ainsi, le fluide de refroidissement à haute pression a une densité plus élevée que le fluide à la pression atmosphérique. Par conséquent, la capacité de refroidissement du fluide à haute pression est augmentée par rapport à celle du fluide à la pression atmosphérique.

Le fluide de refroidissement est susceptible d'éroder les barres conductrices 10 en arrachant des particules de matière des barres, particulièrement à haute pression.

Selon les modes de réalisation illustrés aux figures 9 à 13 et 24 à 29, les barres conductrices 10 ne sont pas en contact avec le fluide de refroidissement empêchant leur détérioration, par abrasion et/ou corrosion.

La figure 9 illustre une coupe partielle selon une direction radiale d'un mode de réalisation du rotor 4.

On retrouve la plaque métallique 9 et les barres conductrices 10 et les moyens de refroidissement comprenant des canaux de refroidissement 22 s'étendant selon une direction axiale dans la masse magnétique 7 et situés entre ou sous les barres conductrices 10 et l'axe (A) de rotation du rotor de manière à ne pas communiquer avec les barres 10.

Les canaux de refroidissement 22 sont disposés entre deux barres conductrices 10 adjacentes et/ou sous les barres 10.

On se réfère plus particulièrement à la figure 10 qui illustre une coupe partielle selon une direction radiale d'un autre mode de réalisation du rotor 4 qui diffère du mode de réalisation précédent en ce que les canaux de refroidissement 22 sont disposés entre deux barres 10 consécutives et sont reliés à des canaux d'évacuation 23 sensiblement radiaux reliant les canaux de refroidissement 22 aux trous référencés 15 disposés sur la périphérie externe de la masse magnétique 7.

Les canaux de refroidissement référencés 22 peuvent être par exemple de section circulaire comme représentée à la figure 9, oblongue comme représentée à la figure 10, triangulaire, en demi-lune.

Chaque canal de refroidissement 22 est alimenté en fluide de refroidissement par des moyens d'alimentation.

En variante, le rotor comprend des plaques telles que représentées à la figure 10 où chaque canal 22 de forme oblongue collecte le fluide de deux canaux de refroidissement tels que décrits à la figure 9.

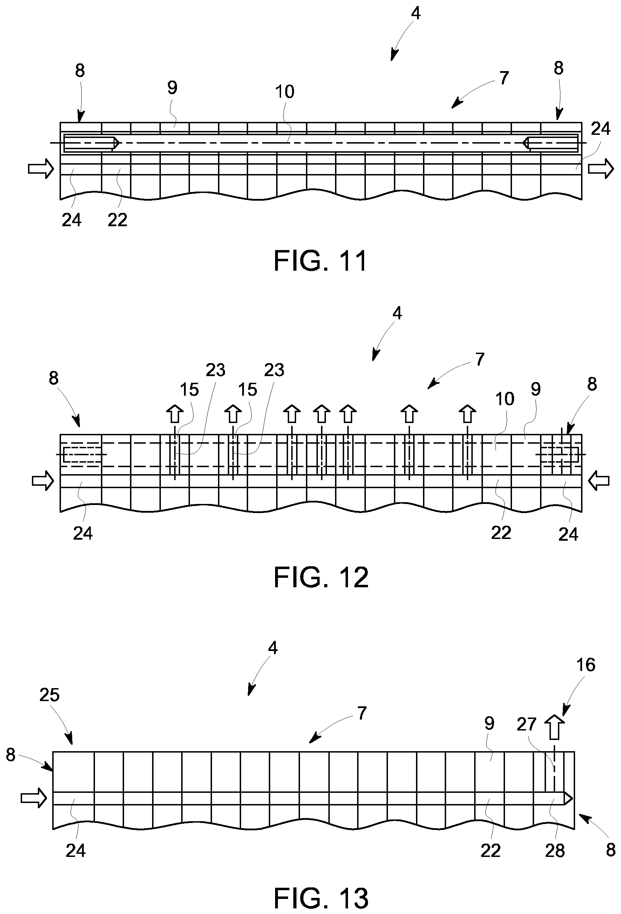

La figure 11 illustre une coupe partielle selon la direction XI-XI du rotor 4 illustré à la figure 9.

Les moyens d'alimentation comprennent un trou traversant 24 selon une direction axiale disposé dans le disque de court-circuit 8 de manière à alimenter le canal de refroidissement 22.

Chaque extrémité du rotor 4 comprend un trou traversant 24.

Bien entendu, comme décrit précédemment le diamètre extérieur du demi-arbre à l'extrémité du rotor comportant le trou traversant référencé 24 est choisi de sorte que du fluide de refroidissement s'écoule de l'extérieur de rotor vers le canal de refroidissement 22, de façon à ne pas obturer les trous 24.

En variante, le demi-arbre comprend un trou débouchant de sorte que du fluide de refroidissement s'écoule de l'extérieur de rotor vers le canal de refroidissement référencé 22.

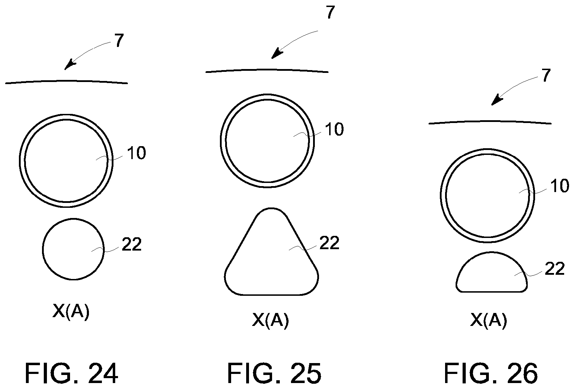

En variante représentée aux figures 24 à 26, le canal 22 peut être placé sous chaque barre dans un plan sensiblement médian, le canal 22 étant de forme diverse par exemple ronde ou triangulaire.

La figure 12 illustre une coupe partielle selon la direction XII-XII du rotor 4 illustré à la figure 10 d'un refroidissement bilatéral.

En variante non représentée, le rotor 4 comprend une seule entrée 24, des canaux 23 répartis uniformément ou pas, une plaque 9 comportant une séparation 19 située à l'opposé de l'entrée 24 et après le dernier canal 23 réalisant ainsi un refroidissement unilatéral.

Cette coupe partielle diffère de la coupe partielle précédente en ce qu'on retrouve les canaux d'évacuation 23 sensiblement radiaux et en ce que les barres 10 sont encapsulées avec un jeu axial et radial dans le disque de court-circuit 8.

La figure 13 illustre une coupe partielle selon une direction axiale d'un autre mode de réalisation du rotor 4 différant du mode de réalisation illustré à la figure 11 en ce que les moyens d'alimentation situés à chaque extrémité du rotor 4 sont de type différent.

Une première extrémité 25 du rotor 4 comprend des moyens d'alimentation selon les moyens d'alimentation décrits à la figure 11 et la deuxième extrémité 26 du rotor 4 comprend des moyens d'alimentation comprenant un trou borgne 27 selon une direction sensiblement radiale communiquant avec un trou borgne 28 selon une direction axiale de manière à évacuer axialement puis radialement le fluide du canal de refroidissement 22.

Il s'agit d'un refroidissement unilatéral.

En variante non représentée, l'évacuation radiale du fluide de refroidissement est réalisée par au moins une plaque 9 comportant un trou borgne 28 dans une direction axiale et un trou borgne 27 sensiblement radial.

Selon une autre variante, deux ou plusieurs plaques 9 comprennent un trou borgne 27 sensiblement radial communiquant avec le canal 22, l'extrémité du canal 22 opposée à l'entrée 24 étant obturée par une séparation 19 ou par le disque de court-circuit 8 dépourvu de trou.

Selon encore une autre variante non représentée, un trou d'entrée 24 sur deux situé sur un diamètre de la première extrémité 25 et un trou borgne 27 sur deux situé à la deuxième extrémité 26 sont alimentés en fluide de refroidissement de sorte que le fluide entre par le trou 24 alimenté et sorte par le trou 27 en traversant le canal 22, et alternativement un trou d'entrée 24 sur deux situé sur un diamètre de la deuxième extrémité 26 et un trou borgne 27 sur deux situé à la première extrémité 25 sont alimentés en fluide de refroidissement de sorte que le fluide entre par le trou 24 et sorte par le trou 27 en traversant un autre canal 22.

Ainsi, pour un canal 22 sur deux le fluide de refroidissement entre à la première extrémité 25 et sort à la deuxième extrémité 26, et pour le deuxième canal 22, le fluide entre à la deuxième extrémité 26 et sort à la première extrémité 25.

Les flux de refroidissement circulent dans les canaux 22 de manière unilatérale, et le refroidissement du rotor est bilatéral à flux croisé.

Selon d'autres modes de réalisation, le refroidissement bilatéral à flux croisé peut être réalisé avec les canaux 13 et/ou 18 qui communiquent avec les barres conductrices 10.

En variante, les plaques 9 aux extrémités du rotor comprennent alternativement un trou traversant 24 sur deux ou un trou borgne axial 28 sur deux communiquant avec un trou borgne 27 sensiblement radial.

Les modes de réalisation des moyens de refroidissement décrits aux figures 7 et 8 peuvent se combiner avec les modes de réalisation des moyens de refroidissement décrits aux figures 2 à 6 et 9 à 13.

Dans les modes de réalisation du rotor 4 décrits précédemment, la masse magnétique 7 comprend des plaques métalliques.

Selon d'autres modes de réalisation du refroidissement du rotor 4, la masse magnétique 7 peut comprendre des tôles magnétiques d'épaisseur inférieure à 2 mm, de préférence entre 0,5 et 0,65 mm compactées de manière à former un rotor feuilleté.

Le rotor 4 comprenant des tôles magnétiques d'épaisseur inférieure à 2 mm peuvent comprendre les moyens de refroidissement et les moyens d'alimentation décrits précédemment.

Les profils des canaux usinés dans les plaques 9 peuvent être obtenus par découpe directe des tôles magnétiques avec un outil de découpe.

Pour limiter le nombre d'outils de découpe, un nombre limité de profils de canaux est sélectionné.

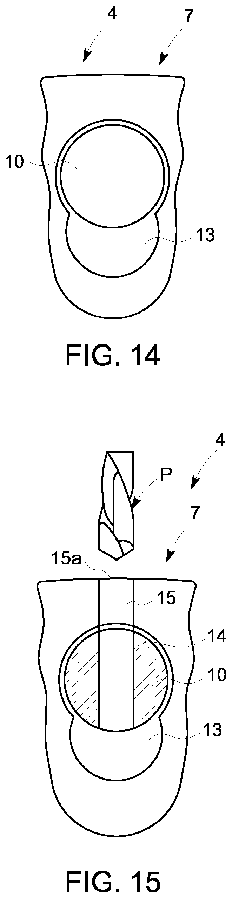

Les figures 14 et 15 représentent des exemples de profils de canaux 13 découpés.

Le profil illustré à la figure 14 comprend le canal 13 et le profil illustré à la figure 15 comprend le canal 13 et une fente 15 pour évacuer le fluide.

Les deux profils illustrés aux figures 14 et 15 comprennent un trou accueillant la barre 10.

Par exemple, un assemblage de vingt tôles magnétiques de 0,5 mm d'épaisseur de profil identique à celui illustré à la figure 15, chaque tôle comportant en périphérie une fente 15 de 8 mm entre la périphérie de la masse magnétique et la barre, l'assemblage forme un trou périphérique 15a rectangulaire de dimensions huit mm sur dix mm lorsque les tôles sont compactées. Le trou périphérique 15a combiné à un trou traversant 14 coaxial dans la barre 10 permet d'évacuer le fluide de refroidissement.

En variante, le trou périphérique 15a peut être usiné dans les tôles magnétiques lorsque la masse magnétique 7 est compactée comme illustré à la figure 15, par une opération de perçage P.

Avantageusement, un seul profil tel qu'illustré à la figure 14 est découpé dans les tôles magnétiques de la masse magnétique 7.

Selon encore une autre variante, le trou périphérique 15a et le trou traversant 14 dans la barre conductrice 10 peuvent être usinés dans la même opération de perçage P de sorte que les trous soient coaxiaux, les barres 10 ayant été introduites dans la masse magnétique 7 au préalable.

Selon d'autres modes de réalisation, la séparation 19 ou un élément d'obturation des canaux de refroidissement dans la masse magnétique 7 comprenant des tôles magnétiques fines compactées, peut être réalisée par des tôles magnétiques découpées avec un trou accueillant la barre 10 sans canal de refroidissement ou par obturation du canal 13 et/ou 18 par la face du disque de court-circuit 8 en contact avec la masse magnétique 7.

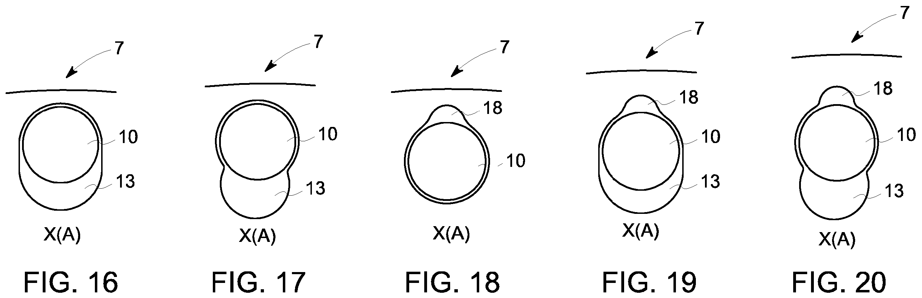

Les figures 16, 17, 18, 19 et 20 illustrent des exemples de profils pouvant être usinés dans les plaques 9 ou découpés dans les tôles magnétiques.

Le profil illustré à la figure 16 ne supporte pas la barre conductrice 10 dans une direction radiale dirigée vers l'axe de rotation (A) du rotor contrairement au profil illustré à la figure 17.

Le profil illustré à la figure 18 montre un exemple de profil du canal 18 sans canal 13.

Le profil illustré à la figure 19 montre un exemple de profil avec des canaux référencés 13 et 18, le profil illustré à la figure 19 ne pouvant supporter la barre 10 contrairement au profil illustré à la figure 20 qui supporte la barre 10 dans une direction radiale dirigée vers l'axe de rotation (A).

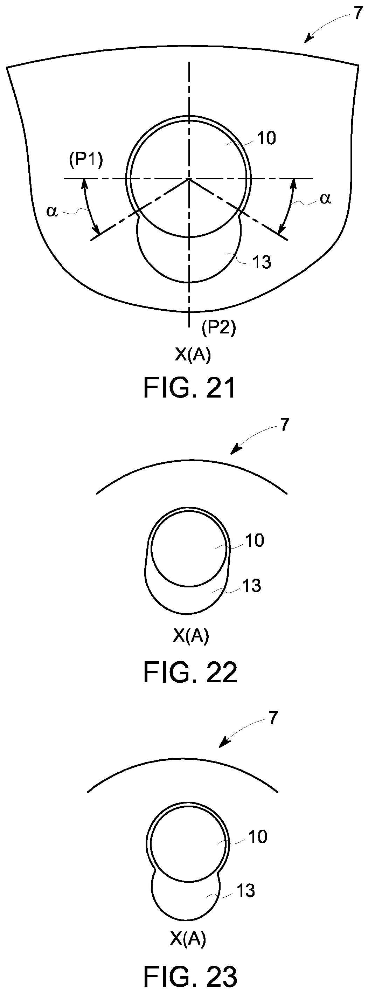

La figure 21 représente en détail la forme d'un exemple de canal 13 supportant la barre conductrice 10 dans une direction radiale dirigée vers l'axe de rotation (A), comme par exemple lorsque le rotor est à l'arrêt.

Sous l'effet de la gravité, certaines barres 10 sont supportées par le canal 13 tel qu'illustré à la figure 21.

La barre 10 comprend un plan médian (P1) perpendiculaire à une direction radiale.

Deux angles α de même valeur compris entre 10° et 45°, de préférence 30°, sont définis entre le plan (P1) et deux rayons du trou accueillant la barre 10, les angles étant orientés entre le plan (P1) et un plan (P2) passant par le centre de la barre 10 selon une direction radiale, chaque angle étant disposé de part et d'autre du plan (P2).

Le trou accueillant la barre 10 est relié à un canal circulaire reliant les deux rayons séparés par l'angle α de sorte que le canal 13 comprend le trou accueillant la barre 10 et le canal circulaire de manière à maintenir la barre selon la direction radiale dirigée vers l'axe de rotation (A) en laissant le fluide de refroidissement s'écouler sous la barre et en contact avec la barre à travers le canal circulaire.

En variante, les deux angles α de part et d'autre du plan (P2) peuvent être différents, par exemple si l'accélération tangentielle dans une première direction de rotation est plus importante que dans la deuxième direction de rotation.

Les figures 22 et 23 représentent deux exemples de profil du canal 13.

Le profil illustré à la figure 23 supporte la barre 10 dans une direction radiale dirigée vers l'axe de rotation (A), contrairement au profil illustré à la figure 22.

La surface du profil illustré à la figure 22 est sensiblement identique à celle du profil illustré à la figure 23 de sorte que les pertes de charge soient sensiblement identiques lorsque le fluide de refroidissement traverse les deux profils.

L'écoulement du fluide de refroidissement est moins perturbé garantissant un débit de fluide plus homogène et plus important à travers le rotor 4 par l'absence de striction lors du passage du fluide.

Selon l'invention, afin de soutenir et supporter la barre 10 lors de son insertion dans la masse magnétique 7 ou lorsque le rotor 4 est à l'arrêt, une plaque métallique 9 ou un ensemble de tôles magnétiques comprenant un canal de profil similaire au canal représenté à la figure 23 étant à la moitié de la longueur de la masse magnétique 7, ou encore localisé en deux endroits sensiblement au tiers de la longueur de la masse magnétique 7.

Les figures 24, 25, 26, 27, 28 et 29 représentent des exemples de profils pouvant être par exemple usinés dans des plaques métalliques 9 ou découpés dans des tôles magnétiques.

Les canaux de refroidissement 22 représentés aux figures 24 à 29 ne débouchent pas sur la barre 10, par exemple pour éviter l'abrasion ou la corrosion de la barre par le passage du fluide de refroidissement.

Les figures 24, 25 et 26 illustrent respectivement des canaux 22 circulaires, triangulaires et en demi-lunes, situés entre la barre 10 et l'axe de rotation (A), sensiblement dans un plan médian radial de la barre 10.

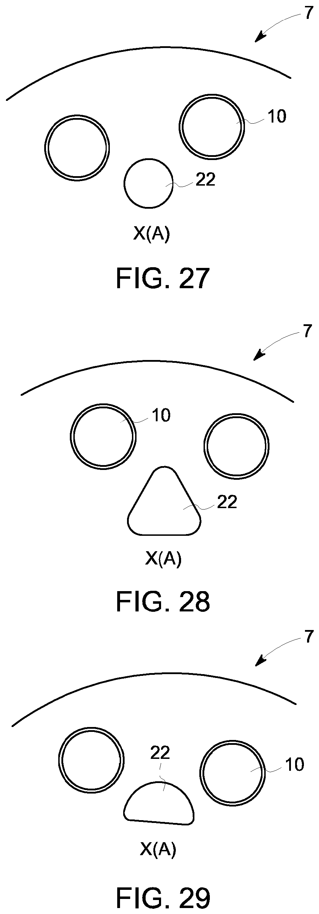

En variante, les figures 27, 28 et 29 illustrent les canaux de refroidissement 22 situés sensiblement dans un plan médian radial entre deux barres 10 adjacentes.

En variante non représentée, les barres conductrices 10 sont rectangulaires, rectangulaires à bords arrondis ou de forme oblongue, de préférence en cuivre ou cuivre allié, en aluminium ou en aluminium allié, ou tout autre matériau conducteur électrique.

Selon encore une autre variante, le rotor comporte deux ou plusieurs rangées de barres conductrices 10 ou de tirants 12 disposés sur deux ou plusieurs diamètres sensiblement concentriques, chaque barre 10 disposant d'un ou plusieurs canaux de refroidissement 13, 18, 22.

Les moyens de refroidissement permettent de refroidir le rotor en augmentant la surface d'échange du rotor avec le fluide de refroidissement et/ou en guidant le fluide de refroidissement au cœur du rotor.

La température du rotor est abaissée augmentant ainsi le rendement global de la machine électrique asynchrone 1 à cage d'écureuil et permettant d'augmenter la puissance électrique de la machine électrique tournante 1.

## Revendications

1. Rotor pour machine électrique tournante asynchrone à arbre non traversant comprenant une masse magnétique cylindrique (7) enserrée entre deux brides de fixation (5a, 6a) de deux demi-arbres (5, 6), et comprenant des moyens de refroidissement aptes à refroidir le rotor, le rotor comprenant en outre des barres conductrices (10) logées dans la masse magnétique (7) et réparties sensiblement uniformément sur un diamètre de la masse magnétique, les moyens de refroidissement comprenant pour chaque barre conductrice au moins un canal de refroidissement (13) débouchant sur la barre selon une direction axiale et situé dans la masse magnétique et au moins un trou traversant (14) disposé dans chaque barre de sorte que le canal de refroidissement communique avec au moins un trou (15) disposé sur la périphérie externe de la masse magnétique, la masse magnétique comprenant des tôles magnétiques compactées ou des empilements de plaques métalliques, les plaques métalliques ou les ensembles de tôles magnétiques compactées soutiennent et supportent les barres conductrices selon une direction radiale lors de leur insertion dans la masse magnétique ou lorsque le rotor est à l'arrêt, les tôles magnétiques compactées ou les empilements de plaque métalliques soutenant et supportant les barres conductrices étant disposés uniquement à la moitié de la longueur de la masse magnétique ou localisés en deux endroits sensiblement au tiers de la longueur de la masse magnétique, et comprennent un canal de section de passage du fluide identique à la section de passage du canal de refroidissement (13).

2. Rotor selon la revendication 1, les moyens de refroidissement comprenant des rainures (20) sur la surface périphérique de la masse magnétique orientées selon une direction axiale ou des rainures circonférentielles (21) sur la surface périphérique de la masse magnétique.

3. Rotor selon la revendication 1, comprenant en outre des moyens d'alimentation pour alimenter en fluide de refroidissement les moyens de refroidissement, les moyens d'alimentation étant reliés aux moyens de refroidissement.

4. Rotor selon l'une quelconque des revendications 1 à 3, dans lequel le canal de refroidissement (13) est situé entre la barre conductrice (10) et un axe (A) de rotation du rotor.

5. Rotor selon la revendication 4, dans lequel les moyens de refroidissement comprennent en outre un deuxième canal (18) de refroidissement alimenté par les moyens d'alimentation pour chaque barre conductrice (10) et situé entre la périphérie externe de la masse magnétique (7) et la barre conductrice.

6. Rotor selon l'une quelconque des revendications 1 à 5, dans lequel chaque extrémité du rotor comprend des moyens d'alimentation.

7. Rotor selon la revendication 6, comprenant en outre un élément de séparation (19) disposé dans le canal de refroidissement entre au moins deux trous périphériques (15) de manière à séparer les flux de fluide de refroidissement s'écoulant depuis chaque extrémité du rotor.

8. Rotor selon l'une quelconque des revendications 1 à 7, dans lequel les trous traversant (14) sont disposés sur la barre conductrice (10) de manière à refroidir la partie la plus chaude de la barre conductrice.

9. Rotor selon l'une des revendications 1 et 2, comprenant des barres conductrices (10) logées dans la masse magnétique (7) et réparties uniformément sur un diamètre de la masse magnétique, les moyens de refroidissement comprenant des canaux (22) de refroidissement s'étendant selon une direction axiale dans la masse magnétique et situés entre les barres conductrices et un axe de rotation du rotor de manière à ne pas communiquer avec les barres conductrices.

10. Rotor selon la revendication 9, dans lequel les canaux (22) de refroidissement sont disposés entre deux barres conductrices (10) adjacentes.

11. Rotor selon la revendication 9, dans lequel les canaux (22) de refroidissement sont disposés sous les barres conductrices (10), dans des plans sensiblement médians aux barres.

12. Rotor selon l'une quelconque des revendications 9 à 11 comprenant en outre des canaux d'évacuation (23) reliant les canaux de refroidissement (22) à des trous (15) disposés sur la surface périphérique externe de la masse magnétique (7).

13. Rotor selon l'une quelconque des revendications 9 à 12, comprenant en outre au moins un disque de court-circuit (8) à une extrémité de la masse magnétique (7) et des moyens d'alimentation situés dans le disque de court-circuit destinés à alimenter en fluide de refroidissement les moyens de refroidissement.

14. Rotor selon la revendication 13, dans lequel le disque de court-circuit (8) comprend sur sa surface périphérique externe des rainures orientées selon une direction axiale ou des rainures circonférentielles.

15. Machine électrique tournante asynchrone comprenant un rotor selon l'une quelconque des revendications précédentes.

## Patentansprüche

1. Rotor für eine rotierende elektrische Asynchronmaschine mit nicht durchgehender Welle, umfassend eine zylindrische Magnetmasse (7), die zwischen zwei Befestigungsflanschen (5a, 6a) von zwei Halbwellen (5, 6) eingespannt ist, und umfassend Kühlmittel, die geeignet sind, den Rotor zu kühlen, wobei der Rotor ferner Stromschienen (10) umfasst, die in der Magnetmasse (7) gelagert und im Wesentlichen gleichmäßig über einen Durchmesser der Magnetmasse verteilt sind, wobei die Kühlmittel für jede Stromschiene mindestens einen Kühlkanal (13), der in axialer Richtung in die Stromschiene mündet und sich in der Magnetmasse befindet, und mindestens ein Durchgangsloch (14) umfassen, das in jeder Stromschiene derart angeordnet ist, dass der Kühlkanal mit mindestens einem an dem äußeren Umfang der Magnetmasse angeordneten Loch (15) in Verbindung steht, wobei die Magnetmasse verdichtete Magnetbleche oder Stapel aus Metallplatten umfasst, wobei die Metallplatten oder die Baugruppen aus verdichteten Magnetblechen in radialer Richtung stützen und tragen, wenn sie in die Magnetmasse eingesetzt werden oder wenn der Rotor stillsteht, wobei die verdichteten Magnetbleche oder die Stapel aus Metallplatten, die die Stromschienen stützen und tragen, nur auf der Hälfte der Länge der Magnetmasse angeordnet sind oder sich an zwei Stellen befinden, die im Wesentlichen auf einem Drittel der Länge der Magnetmasse liegen, und einen Kanal mit einem Durchgangsquerschnitt für das Fluid umfassen, der mit dem Durchgangsquerschnitt des Kühlkanals (13) identisch ist.

2. Rotor nach Anspruch 1, wobei die Kühlmittel Nuten (20) auf der Umfangsfläche der Magnetmasse, die in axialer Richtung ausgerichtet sind, oder Umfangsnuten (21) auf der Umfangsfläche der Magnetmasse umfassen.

3. Rotor nach Anspruch 1, der ferner Versorgungsmittel zu der Versorgung der Kühlmittel mit einem Kühlfluid umfasst, wobei die Versorgungsmittel mit den Kühlmitteln verbunden sind.

4. Rotor nach einem der Ansprüche 1 bis 3, wobei sich der Kühlkanal (13) zwischen der Stromschiene (10) und einer Drehachse (A) des Rotors befindet.

5. Rotor nach Anspruch 4, wobei die Kühlmittel ferner einen zweiten Kühlkanal (18) umfassen, der für jede Stromschiene (10) von den Versorgungsmitteln versorgt wird und sich zwischen dem äußeren Umfang der Magnetmasse (7) und der Stromschiene befindet.

6. Rotor nach einem der Ansprüche 1 bis 5, wobei jedes Ende des Rotors Versorgungsmittel umfasst.

7. Rotor nach Anspruch 6, der ferner ein Trennelement (19) umfasst, das in dem Kühlkanal zwischen mindestens zwei Umfangslöchern (15) angeordnet ist, um die von jedem Ende des Rotors ausströmenden Kühlmittelströme zu trennen.

8. Rotor nach einem der Ansprüche 1 bis 7, wobei die Durchgangslöcher (14) derart an der Stromschiene (10) angeordnet sind, dass sie den heißesten Teil der Stromschiene kühlen.

9. Rotor nach einem der Ansprüche 1 und 2, der Stromschienen (10) umfasst, die in der Magnetmasse (7) gelagert und gleichmäßig über einen Durchmesser der Magnetmasse verteilt sind, wobei die Kühlmittel Kühlkanäle (22) umfassen, die sich in axialer Richtung in der Magnetmasse erstrecken und sich derart zwischen den Stromschienen und einer Drehachse des Rotors befinden, dass sie nicht mit den Stromschienen in Verbindung stehen.

10. Rotor nach Anspruch 9, wobei die Kühlkanäle (22) zwischen zwei benachbarten Stromschienen (10) angeordnet sind.

11. Rotor nach Anspruch 9, wobei die Kühlkanäle (22) unter den Stromschienen (10) in im Wesentlichen mittigen Ebenen zu den Schienen angeordnet sind.

12. Rotor nach einem der Ansprüche 9 bis 11, der ferner Abluftkanäle (23) umfasst, die die Kühlkanäle (22) mit Löchern (15) verbinden, die an der äußeren Umfangsfläche der Magnetmasse (7) angeordnet sind.

13. Rotor nach einem der Ansprüche 9 bis 12, der ferner mindestens eine Kurzschlussscheibe (8) an einem Ende der Magnetmasse (7) und Versorgungsmittel umfasst, die sich in der Kurzschlussscheibe befinden und dazu bestimmt sind, die Kühlmittel mit einem Kühlfluid zu versorgen.

14. Rotor nach Anspruch 13, wobei die Kurzschlussscheibe (8) an ihrer äußeren Umfangsfläche in axialer Richtung ausgerichtete Nuten oder Umfangsnuten umfasst.

15. Rotierende elektrische Asynchronmaschine, die einen Rotor nach einem der vorhergehenden Ansprüche umfasst.

## Claims

1. Rotor for an asynchronous rotary electric machine with a non-through shaft comprising a cylindrical magnetic mass (7) clamped between two fastening flanges (5a, 6a) of two half-shafts (5, 6), and comprising cooling means capable of cooling the rotor, the rotor further comprising conductive bars (10) housed in the magnetic mass (7) and substantially uniformly distributed over a diameter of the magnetic mass, the cooling means comprising for each conductive bar at least one cooling channel (13) opening onto the bar in an axial direction and located in the magnetic mass and at least one through hole (14) arranged in each conductive bar so that the cooling channel communicates with at least one hole (15) arranged on the outer periphery of the magnetic mass, the magnetic mass comprising contacted magnetic sheets or stacks of metal plates, the metal plates or sets of compacted magnetic sheets maintain and support the conductive bars in a radial direction when they are inserted into the magnetic mass or when the rotor is stationary, the compacted magnetic sheets or stacks of metal plates maintaining and supporting the conductive bars being disposed only at half the length of the magnetic mass or located at two locations substantially at one third of the length of the magnetic mass, and comprising a channel with a cross-section of passage of the fluid identical to the passage cross-section of the cooling channel (13).

2. Rotor according to claim 1, the cooling means comprising grooves (20) on the peripheral surface of the magnetic mass oriented in an axial direction or circumferential grooves (21) on the peripheral surface of the magnetic mass.

3. Rotor according to claim 1, further comprising supply means for delivering cooling fluid to the cooling means, the supply means being connected to the cooling means.

4. Rotor according to any one of claims 1 to 3, wherein the cooling channel (13) is located between the conductive bar (10) and an axis (A) of rotation of the rotor.

5. Rotor according to claim 4, wherein the cooling means further comprise a second cooling channel (18) supplied by the supply means for each conductive bar (10) and located between the outer periphery of the magnetic mass (7) and the conductive bar.

6. Rotor according to any one of claims 1 to 5, in which each end of the rotor comprises power supply means.

7. Rotor as claimed in claim 6, further comprising a separation element (19) arranged in the cooling channel between at least two peripheral holes (15) so as to separate the flows of cooling fluid flowing from each end of the rotor.

8. Rotor according to any one of claims 1 to 7, wherein the through holes (14) are arranged on the conductive bar (10) so as to cool the hottest part of the conductive bar.

9. Rotor according to one of claims 1 and 2, comprising conductive bars (10) housed in the magnetic mass (7) and uniformly distributed across a diameter of the magnetic mass, the cooling means comprising cooling channels (22) extending in an axial direction in the magnetic mass and located between the conductive bars and an axis of rotation of the rotor so as not to communicate with the conductive bars.

10. Rotor according to claim 9, wherein the cooling channels (22) are arranged between two adjacent conductive bars (10).

11. Rotor according to claim 9, wherein the cooling channels (22) are arranged beneath the conductive bars (10), in planes substantially median to the bars.

12. Rotor according to any one of claims 9 to 11, further comprising discharge channels (23) connecting the cooling channels (22) to holes (15) arranged on the outer peripheral surface of the magnetic mass (7).

13. Rotor according to any one of claims 9 to 12, further comprising at least one short-circuit disc (8) at one end of the magnetic mass (7) and supply means located in the short-circuit disc intended for supplying the cooling means with cooling fluid.

14. Rotor according to claim 13, wherein the short-circuit disc (8) comprises, on its outer peripheral surface, grooves oriented in an axial direction or circumferential grooves.

15. Asynchronous rotary electric machine comprising a rotor according to any one of the preceding claims.
